# EUROPÄISCHE PATENTSCHRIFT

(11) **EP 2 814 695 B1**
(45) Veröffentlichungstag und Bekanntmachung des Hinweises auf die Patenterteilung: **27.04.2016**
(21) Anmeldenummer: 13704113.3
(22) Anmeldetag: 13.02.2013
(51) Int. Cl.: B60R 1/00, B60R 11/04, G02B 1/11, G02B 5/04, G02B 5/30, G03B 15/00

(54) **KAMERAANORDNUNG FÜR EIN KRAFTFAHRZEUG**
CAMERA-ASSEMBLY FOR A MOTOR VEHICLE
ASSEMBLAGE DE CAMÉRA POUR VÉHICULE AUTOMOBILE

(30) Priorität: 15.02.2012 DE 102012002980
(43) Veröffentlichungstag der Anmeldung: 24.12.2014
(73) Patentinhaber: Leopold Kostal GmbH & Co. KG, 58513 Lüdenscheid (DE)
(72) Erfinder: BÖHNE, Gregor, 44575 Castrop-Rauxel (DE)
(74) Vertreter: Kerkmann, Detlef
(86) Internationale Anmeldenummer: PCT/EP2013/052888
(87) Internationale Veröffentlichungsnummer: WO 2013/120905

(56) Entgegenhaltungen:
- DE-A1- 10 342 837
- DE-A1-102006 008 272
- DE-A1-102007 037 091
- DE-A1-102010 053 509
- JP-A- H11 240 384
- US-A1- 2006 034 002

## Beschreibung

Die Erfindung betrifft eine Kameraanordnung für ein Kraftfahrzeug mit einer im Fahrzeuginnenraum hinter einer Fahrzeugscheibe angeordneten Kamera und einem Strahlführungselement, das zwischen der Fahrzeugscheibe und der Kamera angeordnet ist, welches ein Prisma aufweist oder ausbildet, und das auf seiner Rückseite eine Antireflexbeschichtung aufweist.

Windschutzscheiben moderner Personenkraftwagen haben typischerweise einen Neigungswinkel zwischen 20° und 30°zur Horizontalen. Eine Fahrerassistenzkamera, die im Fahrzeuginnenraum an die Windschutzscheibe angekoppelt ist, beansprucht daher normalerweise eine relativ große Fläche, die der Fahrer wegen der notwendigen optischen Abschirmung nicht durchblicken kann. Eine Verkleinerung der Ankoppelungsfläche trotz eines großen Bilderfassungswinkels ist durch die Verwendung eines Strahlführungselements möglich, das zumindest ein Prisma aufweist. Eine derartige Kameraanordnung ist beispielsweise in der deutschen Offenlegungsschrift DE 103 42 837 A1 beschrieben.

Bei derartigen Anordnungen entstehen Mehrfachbilder, die aufgrund von Mehrfachreflexionen innerhalb einer Fahrzeugscheibe auftreten.

In der nicht vorveröffentlichten deutschen Patentanmeldung DE 10 2010 053 509 wird zur Lösung dieses Reflexproblems der Einsatz einer polarisationsdrehenden Platte oder Folie vorgeschlagen. Nach dem derzeitigen Stand ist es jedoch erstens schwierig, eine temperaturstabile Folie zu beschaffen und zweitens aufwendig, eine solche Folie zu applizieren. Polarisationsdrehende Platten sind extrem teuer und mechanisch sehr empfindlich und kommen daher für einen Einsatz im Automobil kaum in Frage.

Aus der deutschen Offenlegungsschrift DE 10 2007 037 091 A1 ist ein Nachtsichtsystem für Kraftfahrzeuge bekannt. Die Schrift schlägt ein flächiges transparentes Element vor, das entweder eine Antireflexbeschichtung trägt und/oder unter Einschluss eines keilförmigen Freiraumes mit der Fahrzeugscheibe verbunden ist.

Ebenfalls verwendet werden Antireflexbeschichtungen auf einer Prismenrückseite. Allerdings bleibt bei den derzeit bekannten Beschichtungen für große Einfallswinkel immer noch eine relativ starke Restreflexion.

Es stellte sich die Aufgabe, eine Kameraanordnung zu schaffen, die auf einfache und kostengünstige Weise Störungen durch Mehrfachreflexionen besonders gut unterdrückt.

Diese Aufgabe wird erfindungsgemäß dadurch gelöst, dass die Reflektivität der Antireflexbeschichtung zumindest über einen Teilbereich der Lichteinfallswinkel, die den Erfassungsbereich der Kamera bilden, und zumindest über einen Teilbereich des Sensitivitätsspektrums der Kamera für s-polarisiertes Licht kleiner ist als für p-polarisiertes Licht.

Wegen der Windschutzscheibenneigung ist der Lichteinfallswinkel groß und liegt nahe am Brewsterwinkel. Daher ist das reflektierte Licht ohne Antireflexionsbeschichtung stark s-polarisiert. Üblicherweise werden Antireflexbeschichtungen so optimiert, dass die gesamte reflektierte Lichtintensität aller Polarisationsrichtungen minimiert wird. Als Ergebnis erhält man für eine Antireflexbeschichtung, die eine deutliche Absenkung des Reflexionsgrades von s-polarisiertem Licht und gleichzeitig eine geringfügige Absenkung des Reflexionsgrades von p-polarisiertem Licht bewirkt. Insgesamt bleibt jedoch auch mit Antireflexionsbeschichtung wegen der ursprünglich sehr hohen Reflektivität für s-polarisiertes Licht die Restreflexion für s-polarisiertes Licht höher als die für p-polarisiertes Licht.

Erfindungsgemäß ist nun vorgesehen, dass die Reflektivität der Antireflexbeschichtung für s-polarisiertes Licht kleiner ist als für p-polarisiertes Licht. Idealerweise ist die Antireflexbeschichtung so optimiert, dass die s-Polarisationsrichtung möglichst wenig reflektiert wird, während zugelassen wird, dass p-polarisiertes Licht sogar einen erhöhten Reflexionsgrad aufweisen kann. Dadurch wird zwar insgesamt mehr Licht an der beschichteten Prismenfläche reflektiert, aufgrund der aus den Fresnelschen Brechungsgesetzen folgenden niedrigen Reflexion für p-polarisiertes Licht an der Scheibenaußenseite werden aber die unerwünschten Mehrfachreflexionen besonders gut unterdrückt.

Grundsätzlich ist die Reflektivität einer Antireflexbeschichtung sowohl von der Einfallsrichtung als auch von der einfallenden Lichtwellenlänge abhängig. Es ist daher erforderlich, die genannte Optimierung zumindest für einen, vorzugsweise möglichst großen, Teilbereich derjenigen Einfallswinkel vorzunehmen, die im Erfassungbereich der Kamera liegen, sowie auch für zumindest den wichtigsten Teil des von der Kamera erfassten Spektralbereichs. Dieser Teil sollte mindestens die Hälfte des von der Kamera erfassbaren Wellenlängenbereichs umfassen und vorzugsweise den Bereich der maximalen Erfassungsempfindlichkeit der Kamera mit einschließen.

Da auch bei der an der Fahrzeugscheibenaußenseite erfolgenden zweiten Reflexion das p-polarisierte Licht nur sehr wenig reflektiert wird, kann zur Minderung des Reflexproblems auf eine Optimierung der Antireflexbeschichtung für Licht dieser Polarisationsrichtung verzichtet werden. Dadurch ist eine Optimierung bezüglich der s-Polarisation möglich, die über die Standardoptimierung, welche eine Minimierung der Gesamtintensität nach Einfachreflexion vorsieht, hinaus geht.

Antireflexbeschichtungen auf Glasflächen werden üblicherweise durch Beschichtungsmethoden der Dünnschichttechnologie hergestellt, zum Beispiel durch physikalische Gasphasenabscheidung, thermisches Verdampfen oder durch Sputterdeposition. Um eine Antireflexbeschichtung herzustellenden, welche die erfindungsgemäßen polarisationsabhängigen Reflexionseigenschaften aufweist, sind aus den bekannten Beschichtungsmaterialien, wie beispielsweise Siliziumdioxid SiO₂, Titandioxid TiO₂ oder Magnesiumfluorid MgF₂, diejenigen mit geeigneten Brechungsindizes auszuwählen und außerdem die Beschichtungsdicken geeignet vorzugeben. Diese Parameter können durch Anpassungsrechnungen für den jeweiligen Anwendungsfall bestimmt werden.

Die so ausgebildete Antireflexbeschichtung kann vorteilhaft mit zusätzlichen Überzügen zum Schutz gegen Umwelteinflüsse (Feuchtigkeit, Chemikalien, Kratzer usw.) versehen werden.

Im Folgenden soll die Erfindung anhand der Zeichnung dargestellt und näher erläutert werden. Es zeigen
- Figur 1: eine schematisch dargestellte Kameraanordnung,
- Figur 2: den Strahlengang in einem flachen Prisma mit Mehrfachreflexionen,
- Figur 3: Strahlenintensitäten in einem Prisma ohne eine Antireflexbeschichtung,
- Figur 4: Strahlenintensitäten in einem Prisma mit einer bisher üblichen Antireflexbeschichtung,
- Figur 5: Strahlenintensitäten in einem Prisma mit einer erfindungsgemäßen Antireflexbeschichtung.

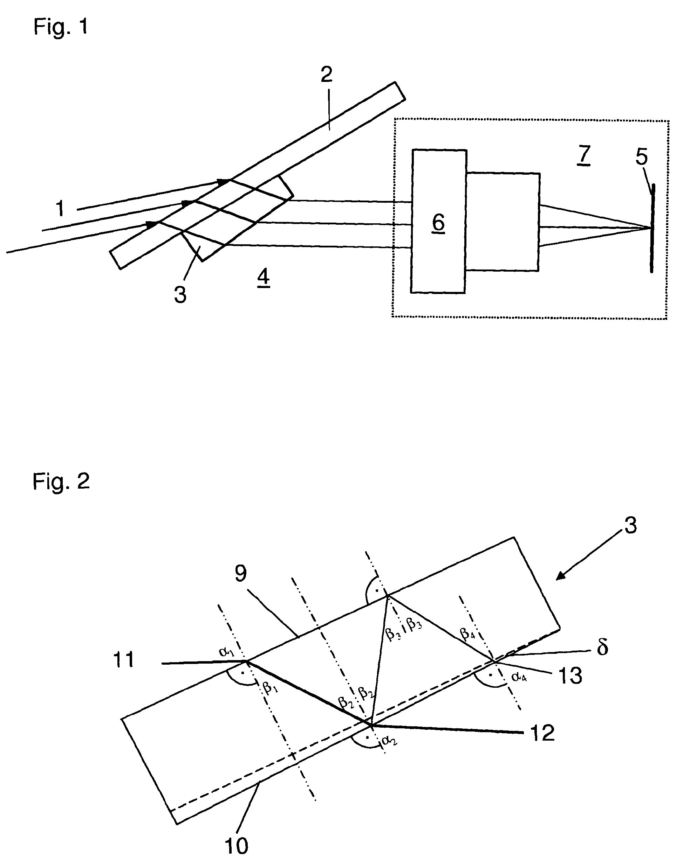

Die Figur 1 zeigt die prinzipielle Anordnung der Komponenten einer erfindungsgemäßen Kameraanordnung. Da vor allem das Aufbau- und Funktionsprinzip verdeutlicht werden soll, sind die dargestellten Komponenten hinsichtlich einer realen konstruktiven Umsetzung hier weder größen- noch winkelgetreu zueinander dargestellt.

Die Anordnung besteht aus einem Prisma 3 und einer Kamera 7, wobei die Kamera 7 die Fahrzeugscheibe 2 durchblickt, also Licht von der Außenseite der Fahrzeugscheibe 2 aufnimmt. Dabei verläuft der Strahlengang 1 von der Fahrzeugscheibe 2 bis zur Kamera 7 durch das Prisma 3 und durch ein, sich zwischen Prisma 3 und Kamera 7 befindendes optisches Medium 4. Der Einfachheit halber sei angenommen, dass als optisches Medium 4 Luft vorgesehen sei. Das Prisma 3 soll hier dadurch charakterisiert sein, dass es eine nicht-parallele optische Fläche zur äußeren Fläche der Fahrzeugscheibe 2 ausbildet. Das Prisma 3 kann dabei durch einen an die Fahrzeugscheibe 2 angefügten Körper aber auch durch eine Anformung der Fahrzeugscheibe 2 ausgeführt sein.

Die Kamera 7 besteht zumindest aus einem Objektiv 6 und einem Licht registrierenden Sensorchip 5. Das Objektiv 6 weist dabei zumindest eine fokussierend wirkende Linse auf. Selbstverständlich können weitere optische, elektronische oder mechanische Komponenten, insbesondere ein Kameragehäuse, ebenfalls Bestandteile der Kamera 7 sein.

Zur Erläuterung des Funktionsprinzips der dargestellten Anordnung ist in der Figur 1 der Verlauf von drei parallelen Lichtstrahlen 1 dargestellt, die auf die Außenseite einer gegen die Einfallsrichtung geneigten Fahrzeugscheibe 2 treffen. Beim Eintritt in die Fahrzeugscheibe 2 werden die Lichtstrahlen 1 zum Scheibenlot hin gebrochen.

An der Innenseite der Fahrzeugscheibe 2 ist ein Prisma 3 angeordnet. Dieses Prisma 3 weist einen gleichen oder ähnlichen Brechungsindex auf wie die Fahrzeugscheibe 2, und ist optisch an die Fahrzeugscheibe 2 angekoppelt, so dass im Übergangsbereich zwischen der Fahrzeugscheibe 2 und dem ersten Prisma 3 praktisch keine Winkelablenkung der Lichtstrahlen 1 erfolgt. Die nach dem Durchgang durch das Prisma 3 noch immer parallel zueinander verlaufende Lichtstrahlen 1 werden durch das Kameraobjektiv 6 auf den Sensorchip 5 der Kamera 7 fokussiert.

Wie die Figur 2 zeigt, ist das Prisma 3 als ein flaches Prisma mit einem kleinen Prismenwinkel δ ausgeführt; der Prismenwinkel δ beträgt hier beispielhaft 2°. Um ein derartiges Prisma stabil aufzubauen, ist das Prisma 3 als Körper mit einem viereckigen Querschnitt ausgebildet, den man sich aus einer planparallelen Platte (oberhalb der gestrichelt eingezeichneten Hilfslinie) und einem daran einstückig angefügten Prismendreieck mit dem brechenden Winkel δ vorstellen kann. Da das Prisma 3 am Anwendungsort, gegebenenfalls unter Zuhilfenahme eines hier nicht dargestellten Koppelkörpers, nahezu brechungsfrei mit der Fahrzeugscheibe 2 verbunden ist, kann man sich bezüglich des Strahlengangs die Fahrzeugscheibe 2 ebenfalls als Teil des planparallelen Abschnitts des Prismas 3 vorstellen. Die nachfolgend diskutierten Mehrfachreflexionen finden daher nicht nur im Prisma, sondern auch in der Fahrzeugscheibe statt. Zur Vereinfachung der Diskussion soll im Folgenden nicht zwischen dem Strahlengang im Prisma und in der Fahrzeugscheibe unterschieden werden.

Die Figuren 2 bis 5 verdeutlichen den Strahlengang durch das Prisma 3. Als rein beispielhafte Zahlenwerte seien für das Prismenmaterial ein Brechungsindex von n = 1,52 und als Prismenwinkel δ ein Wert von 2° angenommen.

Betrachtet wird ein einfallender Strahl 11, der unter einem Einfallswinkel α₁ von 66° zum Einfallslot aus dem Medium Luft auf die scheibenseitige Außenfläche 9 des Prismas 3 fällt. Entsprechend der höheren optischen Dichte des Primenmaterials wird der Lichtstrahl unter dem Winkel β₁ = 36.9° zum Lot hin gebrochen.

Wegen des Prismenwinkels δ = 2° trifft der gebrochene Strahl unter dem Winkel β₂ = β₁ - δ = 34.9° zum Prismenlot auf die Prismenfläche 10 und tritt unter dem Winkel α₂ = 60.5° als "erwünschter" Strahl 12 aus dem Prisma 3 aus.

Innerhalb des Prismas 3 wird eine Teilintensität von der Prismenfläche 10 unter dem Winkel β₂ reflektiert. Nach erneuter Reflexion an der gegenüberliegenden inneren Fläche unter dem Winkel β₃ = β₂ - δ = β₁ - 2δ = 32.9° trifft dieser Strahl unter dem Winkel β₄ = β₃ - δ = β₁ - 3δ = 30.9° auf die innere Prismenfläche und tritt als unerwünschter Reflex 13 unter dem Winkel α₄ = 51.4° aus dem Prisma 3 aus.

Der Differenzwinkel zwischen dem erwünschten Strahl 12 und dem unerwünschten Reflex 13 beträgt α₄ - α₂ =- 9.1°, so dass diese beiden Strahlen 12, 13 aufeinander zu laufen. Daher ist es für die in der Figur 1 skizzierte Anordnung kaum zu vermeiden, dass beide Strahlen 12, 13 von der Kamera 7 erfasst werden.

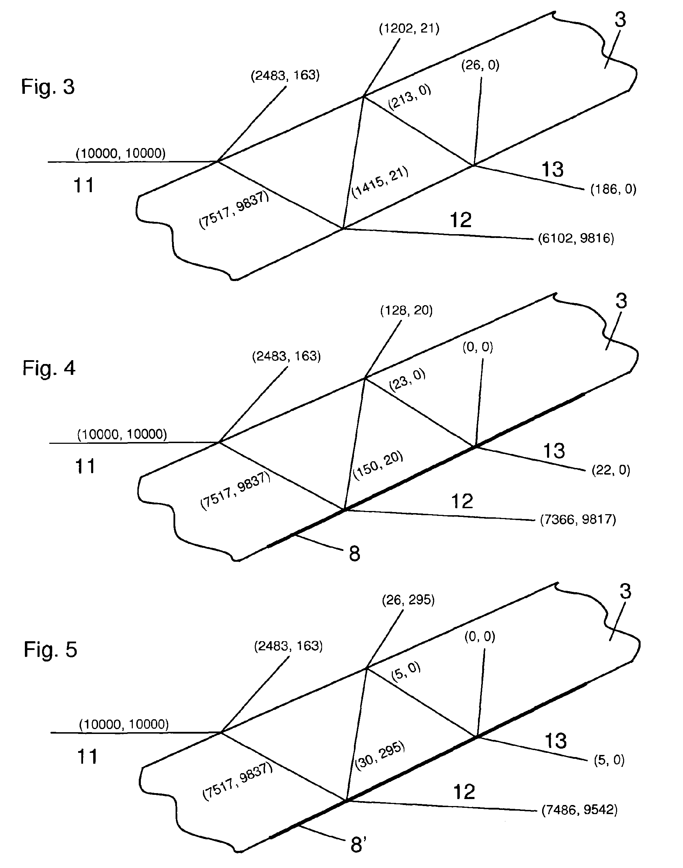

Zur Verdeutlichung, wie der Reflex 13 zum Kamerabild beiträgt, sind in den Figuren 3 bis 5 berechnete Strahlenintensitäten verschiedener Teilstrahlen aufgetragen. Ersichtlich ist, in welchem Maß sich die Strahlenintensitäten jeweils in reflektierte und transmittierte Anteile aufspalten. Die Berechnung erfolgte unter Verwendung der Fresnelschen Formeln; dabei wurde angenommen, dass Absorptionsverluste vernachlässigt werden können.

Dargestellt sind jeweils geordnete Zahlenpaare (s, p), wobei s die senkrecht polarisierte Intensität und p die parallel polarisierte Intensität bezeichnet. Die Bezeichnungen "senkrecht" bzw. "parallel" beziehen sich dabei auf die Einfallsebene des Lichtes. Parallel polarisiertes Licht hat den elektrischen Feldvektor in der Zeichenblattebene; der elektrische Feldvektor von senkrecht polarisiertem Licht steht dem entsprechend senkrecht auf der Zeichenblattebene. Der Wert (s, p) der einfallenden Intensität ist willkürlich auf (10000, 10000) gesetzt.

Die Figur 3 zeigt die Intensitätswerte der Strahlen bei einem Prisma 3 ohne Maßnahmen zur Reflexunterdrückung. Der aus dem Prisma 3 austretende Strahl 12 hat für die beiden Polarisationsrichtungen die Intensitäten (6102, 9816). Das von der Kamera 7 erfasste Hauptbild besteht also aus 61 % des s-polarisierten Lichtes und 98 % des p-polarisierten Lichtes und damit gemittelt aus 79,6 % des einfallenden Lichtes. Das aus den Reflexen 13 entstehende störende Zweitbild ist s-polarisiert. Dessen gesamte Intensität beträgt 1,2 % der Intensität des Hauptbildes beziehungsweise 0,93 % der einfallenden Lichtintensität.

Auch wenn die Intensität eines unerwünschten Reflexes 13 nur wenige Prozent der Intensität des ausfallenden Strahls 12 ausmacht, so wird die Gesamtheit dieser Reflexe 13 doch von der Kamera als störendes Zweitbild deutlich dargestellt und wirkt damit insbesondere bei Nachtaufnahmen mit großen Helligkeitsunterschieden störend. Die Gesamtheit der Strahlen 12 bildet dagegen das Hauptbild aus, das von der Kamera 7 erfasst werden soll.

Die Figur 4 zeigt die Intensitätsverhältnisse für ein Prisma 3, welches auf seiner Rückseite mit einer konventionellen Antireflexbeschichtung 8 versehen ist. Diese besitzt beispielhaft eine Restreflexion von 2 % für s-polarisiertes und 0,2 % für p-polarisiertes Licht. Das Hauptbild besteht hier aus 74 % des einfallenden s-polarisierten Lichtes und 98 % des einfallenden p-polarisierten Lichtes; dies entspricht gemittelt 85,9 % des einfallenden Lichtes.

Das störende Zweitbild ist wiederum vollständig s-polarisiert. Die gesamte Intensität ist 0,13 % des Hauptbildes. Die Intensität des Zweitbilds beträgt somit nur noch 1/9 im Vergleich zu der entsprechenden Intensität bei der in der Figur 3 dargestellten Prismenanordnung ohne Antireflexbeschichtung.

Figur 5 zeigt skizziert die Strahlenintensitäten für ein Prisma 3, mit einer erfindungsgemäßen Antireflexbeschichtung 8', deren Reflektivität über den Erfassungsbereich der Kamera 7 und zumindest über einen Teilbereich des Sensitivitätsspektrums der Kamera 7 für s-polarisiertes Licht kleiner ist als für p-polarisiertes Licht. Besonders vorteilhaft ist natürlich, wenn die Reflektivität der Antireflexbeschichtung 8' sogar über das gesamte Sensitivitätsspektrum der Kamera 7 für s-polarisiertes Licht kleiner ist als für p-polarisiertes Licht.

Beispielhaft sei angenommen, dass die Antireflexbeschichtung 8' eine Restreflexion von 0,4 % für s-polarisiertes und 3 % für p-polarisiertes Licht b besitzt. Man berechnet hieraus, dass das Hauptbild aus 75 % des s-polarisierten Lichtes und aus 95 % des p-polarisierten Lichtes, gemittelt also aus 85,1 % des einfallenden Lichtes gebildet wird.

Das aus den Reflexen 13 bestehende Zweitbild ist wieder vollständig s-polarisiert. Die gesamte Intensität dieses Zweitbilds beträgt hier aber nur noch 0,027 % der Intensität des Hauptbildes. Die Intensität des Zweitbildes beträgt somit nur noch 1/44 der Intensität des Zweitbildes bei einer Prismenanordnung ohne Antireflexbeschichtung gemäß der Figur 3 und auch nur noch 1/5 der Intensität bei einer Prismenanordnung mit einer konventionellen Antireflexbeschichtung 8 wie in der Figur 4 dargestellt.

Typisch für die erfindungsgemäße Antireflexbeschichtung 8' ist, dass die reflektierten Intensitäten insgesamt höher sind als bei einer Standard-Antireflexbeschichtung 8; die Antireflexbeschichtung 8' ist für den Zweck der Reflexunterdrückung also schlechter. Aufgrund der zusätzlichen Ausnutzung der Polarisationsabhängigkeiten ist aber die Intensität des Zweitbildes deutlich reduziert.

### Bezugszeichen

- 1: Lichtstrahlen (Strahlengang)
- 2: Fahrzeugscheibe
- 3: Prisma
- 4: optisches Medium
- 5: Sensorchip
- 6: Objektiv
- 7: Kamera
- 8: Antireflexbeschichtung (üblich)
- 8': Antireflexbeschichtung (erfindungsgemäß)
- 9: scheibenseitige Außenfläche
- 10: Prismenfläche
- 11: einfallender Strahl
- 12: erwünschter, ausfallender Strahl
- 13: unerwünschter Reflex, Strahl
- αₓ, βₓ: Winkel
- δ: Prismenwinkel

## Patentansprüche

1. Kameraanordnung für ein Kraftfahrzeug
mit einer im Fahrzeuginnenraum hinter einer Fahrzeugscheibe (2) angeordneten Kamera (7) und
einem Strahlführungselement, das zwischen der Fahrzeugscheibe (2) und der Kamera (7) angeordnet ist, welches ein Prisma (3) aufweist oder ausbildet,
und das auf seiner Rückseite eine Antireflexbeschichtung (8, 8') aufweist,
**dadurch gekennzeichnet,**
**dass** die Reflektivität der Antireflexbeschichtung (8') zumindest über einen Teilbereich der Lichteinfallswinkel, die den Erfassungsbereich der Kamera (7) bilden, und zumindest über einen Teilbereich des Sensitivitätsspektrums der Kamera (7) für s-polarisiertes Licht kleiner ist als für p-polarisiertes Licht.

2. Kameraanordnung nach Anspruch 1, **dadurch gekennzeichnet, dass** die Reflektivität der Antireflexbeschichtung (8') über den Erfassungsbereich der Kamera (7) und zumindest über einen Teilbereich des Sensitivitätsspektrums der Kamera (7) für s-polarisiertes Licht minimiert ist.

3. Kameraanordnung nach Anspruch 1, **dadurch gekennzeichnet, dass** der Teilbereich des Sensitivitätsspektrums mindestens die Hälfte des Sensitivitätsspektrums der Kamera (7) umfasst.

4. Kameraanordnung nach Anspruch 1 oder 3, **dadurch gekennzeichnet, dass** der Teilbereich des Sensitivitätsspektrums das Sensitivitätsmaximum des Sensitivitätsspektrums einschließt.

5. Kameraanordnung nach Anspruch 1, **dadurch gekennzeichnet, dass** der genannte Teilbereich der Lichteinfallswinkel mindestens die Hälfte des Erfassungsbereich der Kamera (7) umfasst.

6. Kameraanordnung nach Anspruch 1, **dadurch gekennzeichnet, dass** die Antireflexbeschichtung (8') aus mehreren Materialschichten besteht.

7. Kameraanordnung nach Anspruch 6, **dadurch gekennzeichnet, dass** zusätzlich auf die die Antireflexbeschichtung (8') bildenden Materialschichten mindestens ein gegen Umwelteinflüsse schützende Beschichtung aufgetragen ist.

## Claims

1. Camera arrangement for a motor vehicle
having a camera (7) arranged behind a vehicle window (2) in the interior of the vehicle and
a beam-guiding element which is arranged between the vehicle window (2) and the camera (7) and which possesses or forms a prism (3),
and which has an antireflective coating (8, 8') on its rear side
**characterised in that**
the reflectivity of the anti-reflective coating (8') is smaller for s-polarised light than for p-polarised light over at least a subsection of the angle of light incidence constituting the detection range of the camera (7) and over at least a subsection of the sensitivity spectrum of the camera (7).

2. Camera arrangement according to Claim 1, **characterised in that** the reflectivity of the antireflective coating (8') is minimised for s-polarised light over the detection range of the camera (7) and over at least a subsection of the sensitivity spectrum of the camera (7).

3. Camera arrangement according to Claim 1, **characterised in that** the subsection of the sensitivity spectrum encompasses at least half of the sensitivity spectrum of the camera (7).

4. Camera arrangement according to Claim 1 or Claim 3, **characterised in that** the subsection of the sensitivity spectrum incorporates the sensitivity maximum of the sensitivity spectrum.

5. Camera arrangement according to Claim 1, **characterised in that** the specified subsection of the angle of light incidence encompasses at least half of the detection range of the camera (7).

6. Camera arrangement according to Claim 1, **characterised in that** the antireflective coating (8') is composed of a plurality of material layers.

7. Camera arrangement according to Claim 6, **characterised in that**, in addition to the material layers constituting the antireflective coating (8'), at least one coating is applied which is protective against environmental influences.

## Revendications

1. Système de caméra pour un véhicule automobile
avec une caméra (7) qui est disposé à l'intérieur du véhicule automobile, derrière une glace (2) dudit véhicule automobile, et
avec un élément de guidage du faisceau, qui est disposé entre la glace (2) du véhicule automobile et la caméra (7) et présente ou forme un prisme (3),
et qui présente un revêtement antireflets (8, 8') sur sa face arrière,
**caractérisé en ce que**
la réflectivité du revêtement antireflets (8') est, au moins sur une zone partielle des angles d'incidence de la lumière qui forment le plage de captage de la caméra (7), et au moins sur une zone partielle du spectre de sensibilité de la caméra (7), est plus petite pour la s - lumière polarisée que pour la p - lumière polarisée.

2. Système de caméra selon la revendication 1, **caractérisé en ce que** la réflectivité du revêtement antireflets (8') est minimisée pour la s - lumière polarisée, sur la plage de captage de la caméra (7) et au moins sur une zone partielle du spectre de sensibilité de la caméra (7).

3. Système de caméra selon la revendication 1, **caractérisé en ce que** la zone partielle du spectre de sensibilité comprend au moins la moitié du spectre de sensibilité de la caméra (7).

4. Système de caméra selon revendication 1 ou 3, **caractérisé en ce que** ladite zone partielle du spectre de sensibilité comprend le maximum de sensibilité dudit spectre de sensibilité.

5. Système de caméra selon la revendication 1, **caractérisé en ce que** la zone partielle de l'angle d'incidence de lumière comprend au moins la moitié de la plage de captage de la caméra (7).

6. Système de caméra selon la revendication 1, **caractérisé en ce que** le revêtement antireflets (8') consiste en plusieurs couches.

7. Système de caméra selon la revendication 6, **caractérisé en ce que**, sur les couches de matière formant le revêtement antireflets (8'), est appliqué supplémentairement au moins un revêtement de protection contre les influences de l'environnement.
